(19) Europäisches Patentamt

European Patent Office

Office européen des brevets

(11) Veröffentlichungsnummer: **0 512 205 A2**

# (12) EUROPÄISCHE PATENTANMELDUNG

(21) Anmeldenummer: **92103017.7**

(22) Anmeldetag: **22.02.92**

(51) Int. Cl.⁵: **B23C 3/28**, B23F 1/06, B23F 19/06, B23F 23/12

(30) Priorität: **02.05.91 DE 4114341**

(43) Veröffentlichungstag der Anmeldung:
**11.11.92 Patentblatt 92/46**

(84) Benannte Vertragsstaaten:
**CH DE FR GB IT LI**

(71) Anmelder: **WERA WERK HERMANN WERNER GmbH & CO.**
**Korzerter Strasse 21**
**W-5600 Wuppertal 12(DE)**

(72) Erfinder: **Garschagen, Friedrich Albert**
**Am Hasenclev 7**
**W-5630 Remscheid(DE)**

(74) Vertreter: **Rieder, Hans-Joachim, Dr. et al**
**Corneliusstrasse 45**
**W-5600 Wuppertal 11(DE)**

(54) Maschine zur Bearbeitung umlaufender Werkstücke.

㊹ Die Erfindung betrifft eine Maschine zur Bearbeitung umlaufender Werkstücke mittels eines im bestimmten Drehzahlverhältnis synchron dazu umlaufenden Werkzeugs, insbesondere Schlagmesserfräsmaschinen und schlägt zur Variation des Punktes, an welchem das motorisch angetriebene Werkzeug bei jedem Umlauf seine Bearbeitung beginnt, vor, daß Werkstück (23) und Werkzeug (25) mittels getrennter, über eine elektrische Welle im Synchronlauf gehaltener Motore (10, 26) angetrieben und mindestens einer dieser Antriebe (10 bzw. 26) um seine Rotorachse (R) drehverstellbar ist.

FIG. 3

EP 0 512 205 A2

Die Erfindung betrifft eine Maschine gemäß Gattungsbegriff des Anspruches 1.

Eine Maschine der in Rede stehenden Art ist bekannt aus der DE-PS 26 14 966, die es erlaubt, Nuten an umlaufenden Werkstücken zu erzeugen. Es können dabei sowohl geradlinig verlaufende als auch schraubengangförmige Nuten an den Werkstücken gefräst werden. Zur Erzeugung solcher Nuten findet eine vorwärts- oder rückwärtsgerichtete Phasenverschiebung im Synchronlauf von Werkstück und Werkzeug statt. Ihren Synchronantrieb erhalten letztere von einem elektromotorisch angetriebenen Getriebe. Zwecks Erzielung der Phasenverschiebung im Synchronlauf ist die Werkstück-Antriebswelle mit einem schrägverzahnten Abschnitt versehen, welcher zu einer mit ihm in Eingriff stehenden Antriebsscheibe in Achsrichtung verschiebbar ist. Das Maß der Verschiebung erfolgt dabei durch Abtastung eines zusammen mit dem Vorschub des Werkstücksupports bewegten Lineals. Je nach Gestaltung desselben kann der Punkt, an welchem das motorisch angetriebene Werkzeug bei jedem Umlauf seine Bearbeitung am ebenfalls motorisch angetriebenen Werkstück beginnt, vorwärts oder rückwärts verstellt werden. Über eine Elektronik ist es dabei möglich, die Abtastung zu spreizen oder zu verzerren.

Der Erfindung liegt die Aufgabe zugrunde, die Phasenverschiebung im Synchronlauf von Werkstück und Werkzeug in einfacher Weise zu bewerkstelligen; entsprechende Einstellungen an den jeweiligen Bearbeitungsprozeß sollen dabei einfachst vornehmbar sein.

Gelöst wird diese Aufgabe durch die im Kennzeichen des Anspruches 1 angegebenen Merkmale.

Die Unteransprüche betreffen vorteilhafte Weiterbildungen der erfinderischen Lösung.

Zufolge derartiger Ausgestaltung ist eine gattungsgemäße Maschine angegeben, die sich neben einem herstellungstechnisch einfachen Aufbau durch eine optimale Bedienung auszeichnet. Der Antrieb von Werkstück und Werkzeug geschieht nun mittels getrennter, über eine elektrische Welle im Synchronlauf gehaltener Motore. Das heißt, daß sowohl dem Werkstück als auch dem Werkzeug je ein Motor zugeordnet ist. Spezielle Getriebe zur Erzielung der Synchronisation können demgemäß entfallen. Zwecks Erzielung der Phasenverschiebung ist dabei einer dieser Motore um seine Rotorachse drehverstellbar. Bei Herstellung einer Schrägverzahnung dreht daher der Motor entsprechend der Vorschublänge und des Schrägungswinkels um einen vorgegebenen Betrag. Eine bei solchen Maschinen vorgesehene elektronische Steuerung kann demgemäß entsprechend des Vorschubweges und der Steigung in einfacher Weise programmiert werden, da der Synchronlauf der über eine elektrische Welle angetriebenen Motoren unverändert bleibt. Die Drehverstellung einer der Motore um seine Rotorachse kann auf verschiedene Weise erfolgen. Eine besonders einfache Möglichkeit besteht darin, das Statorgehäuse mindestens des einen Motors konzentrisch zur Rotorachse zu lagern. Die Drehverstellung geschieht dabei mit eines Stellmotors um die Rotorachse. Durch diesen wird der Motor in der jeweiligen Stellung gehalten. Eine Selbstverstellung scheidet aus. Durch Programmsteuerung erhält der Stellmotor den Impuls, das Statorgehäuse um den entsprechenden Winkelbetrag zu drehen. Als Drehverstell-Antrieb zwischen Einstellmotor und Statorgehäuse eignet sich insbesondere ein Schneckentrieb. Die Schneckenwelle wird angetrieben vom Einstellmotor, während das Schneckenrad dem Statorgehäuse zugeordnet ist. Andere Modifizierungen des Drehverstell-Antriebs wären möglich. Der Erfindungsgedanke ist sodann übertragbar auf Schabemaschinen und solchen Maschinen, wo überlagerte Drehbewegungen zum Synchronlauf erforderlich sind. Bei Übertragung des Erfindungsgedankens auf eine Schabemaschine ist das Werkzeug ein Schaberad und das Werkstück ein in seiner Zahnflankenkontur zu korrigierende Zahnrad. Durch kontinuierliche Änderung der Phasenlage bzw. entsprechendem Vor- bzw. Nachlauf des Punktes, an welchem das Werkzeug seine Arbeit am Zahnrad beginnt, können die Zahnflanken die angestrebte Oberflächenglättung erhalten. Neben der Oberflächenglättung können bei einer derartigen Schabemaschine, bei welcher das Schaberad auch die Form einer Schnecke aufweisen kann, durch die Änderung der Phasenlage von angetriebenem Werkzeug und angetriebenem Werkstück die Zahnflanken plastisch verformt werden. Hierbei können beispielsweise ballige Zahnflanken eingestellt werden. Es ist bei einer derartigen Anwendung unter Umständen nicht einmal nötig, daß tatsächlich Material vom Werkstück abgearbeitet wird. Allein das ein kontinuierliche Ändern der Phasenlage zwischen Werkstück und Werkzeug bewirkt ein Verformen durch mechanischen Druck auf die Verzahnung. Wird bei einer Schabemaschine ein Materialabtrag gewünscht, so findet - wenn überhaupt - nur in zweiter Linie eine Verformung der Verzahnung statt, es wird vielmehr durch das Schaberad entsprechend der Zustellung durch Änderung der Phasenlage von Werkzeug und Werkstück Material an den Angriffspunkten von Werkzeug an Werkstück abgetragen. Letztgenannte Anwendung wird bevorzugt angewendet bei der Herstellung von an den Zahnflanken ballig auslaufenden Zähnen. Durch die kontinuierliche Drehzustellung und dem Beibehalten des - wenn auch phasenverschobenen - Synchronlaufes wird eine gleichmäßige Zahnbearbeitung gewährleistet. Die Materialabarbeitung kann feinfühlig durch die Drehung eines Motors um seine Motorachse eingestellt werden, wobei je nach Drehrichtung nacheinander erst die eine oder die andere Zahnflanke bearbeitet werden kann. Es ist bei dieser Methode auch denkbar, die Phasenverschiebung durch andere Mittels als durch die Drehung eines Antriebsmotors zu erreichen, z. B. durch eine entsprechende elektronische Ansteuerung der mit entsprechender Drehzahl laufenden Antriebsmotoren.

Nachstehend werden zwei Ausführungsbeispiele der Erfindung anhand von Zeichnungen näher erläutert. Es zeigt:

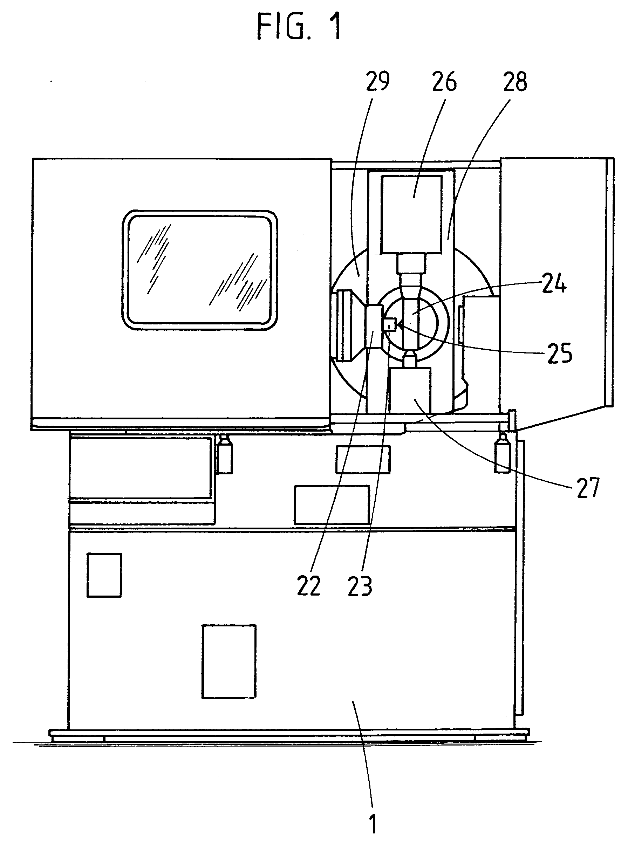

Fig. 1     eine Ansicht einer als Verzahnmaschine ausgebildeten Maschine gemäß der ersten Ausführungsform,

Fig. 2     den Werkstückantrieb teils in Ansicht, teils im Schnitt mit zugeordnetem Werkzeugantrieb und

Fig. 3     einen abgewandelt gestalteten Werkstückantrieb nebst zugehörigem Werkzeugantrieb, betreffend die zweite Ausführungsform.

Bezüglich der dargestellten Verzahnmaschine handelt es sich um eine Schlagmesserfräsmaschine. Letztere besitzt ein Maschinengestell 1 zur Aufnahme eines Werkstück-Antriebes 2 und eines Werkzeug-Antriebes 3.

Im einzelnen weist der Werkstück-Antrieb 2 ein am einem Schlitten 21 befestigtes Lagergehäuse 4 auf, welches unter Vermittlung von zwei axial hintereinander angeordneten Wälzlagern 5, 6 ein Schneckenrad 7 trägt. Letzteres ist mit einem Stirnring 8 fest verbunden, welcher seinerseits mit der Flanschplatte 9 des Statorgehäuses G eines Elektro-Motors 10 in nicht näher veranschaulichter Weise verschraubt ist. Bei einer Drehverlagerung des Schneckenrades 7 wird daher auch der Elektro-Motor 10 mitgenommen. Mit dem Schneckenrad 7 kämmt eine Schnecke 11, die ihrerseits von einem außenseitig am Lagergehäuse 4 festgelegten Einstellmotor 12 drehbar ist.

Das Schneckenrad 7 ist mit einer mittleren Bohrung 12 versehen, die mit einer Bohrung 13 des Stirnringes 8 fluchtet. Beide Bohrungen 12, 13 werden durchsetzt von der von Lagern 31 gestützten Rotorwelle 14 des Elektro-Motors 10. An ihrem freien Ende trägt diese eine drehfest angeordnete Riemenscheibe 15. Ein Antriebsriemen 16 umfaßt diese und treibt eine Antriebsscheibe 17 an, welche drehfest auf dem einen Ende einer Antriebswelle 18 angeordnet ist. Bezüglich des Antriebsriemens 16 kann es sich um einen Zahnriemen handeln. Dementsprechend ist auch die Mantelfläche der Riemenscheibe 15 und der Antriebsscheibe 17 gestaltet.

Die Antriebswelle 18 wird von mit Abstand zueinander angeordneten Wälzlagern 19, 20 des Schlittens 21 getragen. Dieser ist mittels nicht näher veranschaulichter Führungen des Maschinengestells 1 in Richtung des Pfeiles x verlagerbar. An ihrem freien Ende trägt die Antriebswelle 18 ein Spannfutter 22 zur Aufnahme eines Werkstückes 23. Die Drehrichtung der Antriebswelle 18 und damit des Werkstückes 23 ist mit a angegeben.

Senkrecht zur Werkstück-Antriebswelle 18 verläuft eine Fräserwelle 24, die ein radial ausladendes Werkzeug 25 in Form eine Schneide trägt. Zum Antrieb der Fräserwelle 24 in Pfeilrichtung b dient ein Elektro-Motor 26. Dieser und der Elektro-Motor 10 sind über eine elektrische Welle im Synchronlauf angetrieben, und zwar in einem bestimmten Drehzahlverhältnis. Soll z. B. ein Werkstück vier längsverlaufende Nuten an seinem Umfang erhalten, so wird ein Drehzahlverhältnis zwischen Werkzeug und Werkstück von 4:1 gewählt. Andere Drehzahlverhältnisse sind ebenfalls einstellbar.

Dem freien Ende der Fräserwelle 24 ist ein Gegenhalter 27 zugeordnet. Letzterer und der Elektro-Motor 26 sitzen auf einem Träger 28, welcher einem justierbaren, vertikal ausgerichteten Drehteller 29 zugeordnet ist.

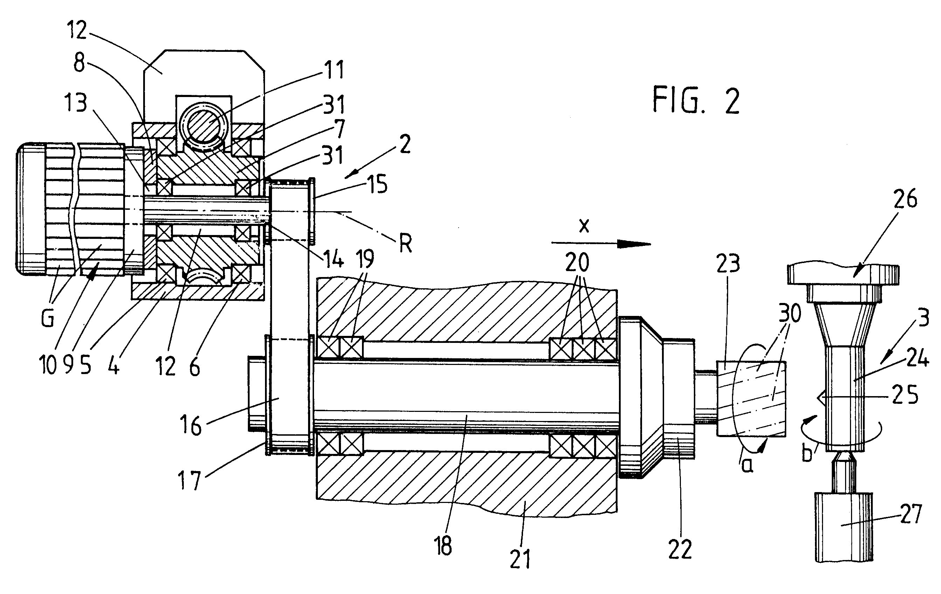

Soll das Werkstück 23, wie in Fig. 2 strichpunktiert veranschaulicht ist, an seinem Umfang schräg verlaufende Nuten 30 erhalten, so wird entsprechend der Nutenzahl ein bestimmtes Drehzahlverhältnis zwischen den Elektro-Motoren 10, 26 gewählt. Sodann treibt der Einstellmotor 12 die Schnecke 11 abhängig vom Werkstückdurchmesser, dem Schrägungswinkel der Nuten und dem zurückzulegenden Weg mit einer entsprechenden Drehzahl an, welche Drehverstellung über das Schneckenrad 7 auf den Elektro-Motor 10 übertragen wird. Dieser dreht damit um die Rotorachse R, welche Drehverlagerung als Phasenverschiebung im Synchronlauf von Werkstück und Werkzeug auftritt. Das bedeutet, daß der Eintauchpunkt des schneidenförmigen Werkzeuges 25 in das Werkstück 23 sich einhergehend verändert, ohne daß aufwendige Differentialgetriebe oder eine kompliziert herzustellende Software zu fertigen wäre.

Sind geradverlaufende Nuten am Umfang des Werkstückes zu fertigen, so braucht über den Einstellmotor 12 keine Drehverstellung des Elektro-Motors 10 vorgenommen zu werden.

Alternativ lassen sich auch zufolge der Phasenverschiebung im Synchronlauf über den Einstellmotor 12 winkelförmig verlaufende Nuten, Nuten an Kugelköpfen etc. erzeugen.

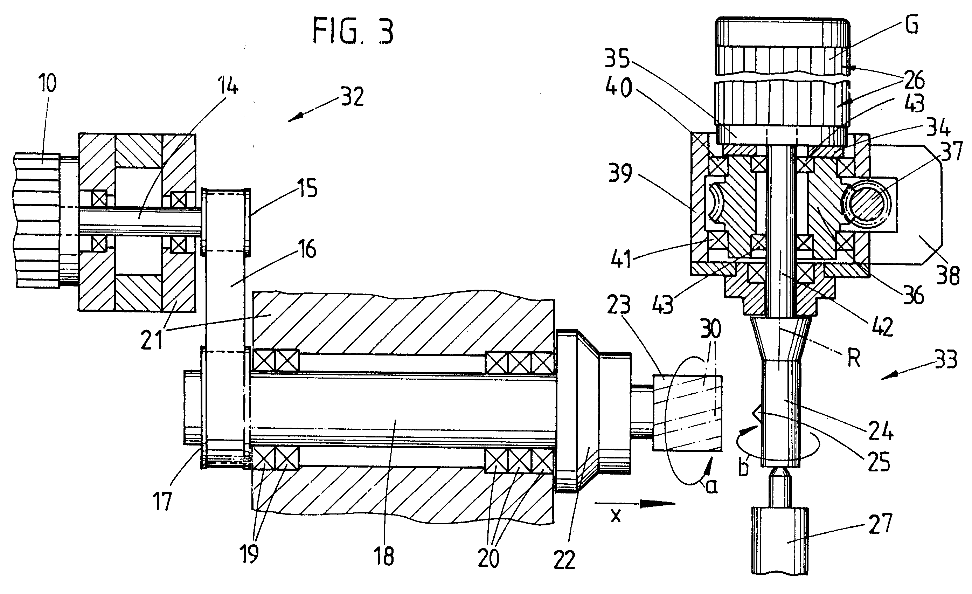

Gemäß der in Fig. 3 veranschaulichten, zweiten Ausführungsform sitzt das Statorgehäuse G des Elektro-Motors 10 fest am Schlitten 21. Die Rotorwelle 14 überträgt ihre Drehbewegung in gleicher Weise über einen Riementrieb 15, 16, 17 auf die Antriebswelle 18 mit Spannfutter 22. Der entsprechende Werkstück-Antrieb trägt nun die Bezugsziffer 32. Abgeändert gegenüber dem ersten Ausführungsbeispiel ist ebenfalls der Werkzeug-Antrieb 33. Das Statorgehäuse G des Elektro-Motors 26 ist über einen Stirnring 34 und Flanschplatte 35 drehfest mit einem Schneckenrad 36 verbunden. Angetrieben wird dieses von einer Schnecke 37 eines Einstellmotors 38, welcher seinerseits von dem Lagergehäuse 39 ausgeht. Dieses ist in geeigneter Weise am Träger 28 festgelegt.

Wie beim ersten Ausführungsbeispiel nimmt das Lagergehäuse 39 zwei Wälzlager 40 und 41 zur Lagerung des Schneckenrades 36 auf. Die Motorwelle 42 durchgreift das Schneckenrad 36 und ist innerhalb dieses von zwei hintereinander angeordneten Wälzlagern 43 gestützt. Mittels der Motorwelle 42 wird die Fräserwelle 24 in der gezeigten Pfeilrichtung b angetrieben.

Soll bei der zweiten Ausführungsform eine Schrägverzahnung bzw. schrägverlaufende Nuten 30 am Werkstück 23 erzeugt werden, so veranlaßt der Einstellmotor 38 eine Drehverstellung des Elektro-Motors 26 um seine Rotorachse R, welche Drehverlagerung als Phasenverschiebung im Synchronlauf von Werkstück und Werkzeug auftritt. Sowohl bei dieser als auch bei der vorerwähnten Ausgestaltung verhindert die Schnecke im Zusammenwirken mit dem Schneckenrad eine ungewollte Verdrehung des entsprechenden Elektro-Motors.

Anstelle des Elektromotors kann auch ein vom Motor angetriebenes Getriebe, z. B. ein Differentialgetriebe um seine Rotorachse gedreht werden, um so die Phasenlage von Werkzeug und Werkstück zu beeinflußen.

Die in der vorstehenden Beschreibung, der Zeichnung und den Ansprüchen offenbarten Merkmale der Erfindung können sowohl einzeln als auch in beliebiger Kombination für die Verwirklichung der Erfindung von Bedeutung sein. Alle offenbarten Merkmale sind erfindungswesentlich. In die Offenbarung der Anmeldung wird hiermit auch der Offenbarungsinhalt der zugehörigen/beigefügten Prioritätsunterlagen (Abschrift der Voranmeldung) vollinhaltlich mit einbezogen.

**Patentansprüche**

1. Maschine zur Bearbeitung umlaufender Werkstücke mittels eines im bestimmten Drehzahlverhältnis synchron dazu umlaufenden Werkzeugs, insbesondere Schlagmesserfräsmaschinen, bei welcher der Punkt, an welchem das motorisch angetriebene Werkzeug bei jedem Umlauf seine Bearbeitung am ebenfalls motorisch angetriebenen Werkstück beginnt, einstellbar ist, dadurch gekennzeichnet, daß das Werkstück (23) und Werkzeug (25) mittels getrennter, über eine elektrische Welle im Synchronlauf gehaltener Motore (10, 26) angetrieben und mindestens einer dieser Antriebe (10 bzw. 26) um seine Rotorachse (R) drehverstellbar ist.

2. Maschine nach Anspruch 1 oder insbesondere danach, dadurch gekennzeichnet, daß das Statorgehäuse (G) mindestens des einen Motors (10, 26) konzentrisch zur Rotorachse (R) gelagert und mittels eines Stellmotors (12 bzw. 38) um diese Achse drehverstellbar ist.

3. Maschine nach einem oder mehreren der vorhergehenden Ansprüche oder insbesondere danach, dadurch gekennzeichnet, daß der Drehverstell-Antrieb zwischen Einstellmotor (12, 38) und Statorgehäuse (G) als Schneckentrieb (7, 11 bzw. 36, 37) gestaltet ist.

4. Maschine nach einem oder mehreren der vorhergehenden Ansprüche oder insbesondere danach, dadurch gekennzeichnet, daß das Werkzeug ein Schaberad und das Werkstück ein in seiner Zahnflankenkontur zu korrigierendes Zahnrad ist.

# FIG. 1

FIG. 2

# FIG. 3

EP 0 512 205 A2